# EUROPÄISCHE PATENTSCHRIFT

(11) **EP 2 993 389 B1**
(45) Veröffentlichungstag und Bekanntmachung des Hinweises auf die Patenterteilung: **07.10.2020**
(21) Anmeldenummer: 15002483.4
(22) Anmeldetag: 21.08.2015
(51) Int. Cl.: B60Q 1/50, G01C 21/36, F21V 9/14, F21S 41/135

(54) **VERFAHREN ZUM BELEUCHTEN EINES UMGEBUNGSBEREICHS EINES KRAFTFAHRZEUGS, SCHEINWERFER UND KRAFTFAHRZEUG**
METHOD FOR ILLUMINATING A SURROUNDING OF A MOTOR VEHICLE, AND MOTOR VEHICLE HEADLAMP
PROCEDE D'ECLAIRAGE D'UNE ZONE ENVIRONNANTE D'UN VEHICULE AUTOMOBILE, PHARE ET VEHICULE AUTOMOBILE

(30) Priorität: 06.09.2014 DE 102014013205
(43) Veröffentlichungstag der Anmeldung: 09.03.2016
(73) Patentinhaber: AUDI AG, 85045 Ingolstadt (DE)
(72) Erfinder: Altinger, Harald, DE - 85049 Gerolfing (DE)
(74) Vertreter: Thielmann, Frank

(56) Entgegenhaltungen:
- WO-A1-87/04396
- WO-A1-2013/088673
- DE-A1-102006 050 547
- DE-A1-102010 034 853
- DE-A1-102011 081 396
- DE-B3-102006 013 700
- DE-U1-202011 003 597
- FR-A1- 2 723 895
- GB-A- 486 836
- US-A1- 2003 147 247
- US-B2- 8 260 536

## Beschreibung

Die Erfindung betrifft ein Verfahren zum Beleuchten eines Umgebungsbereichs eines Kraftfahrzeugs gemäß Patentanspruch 1. Des Weiteren betrifft die Erfindung einen Scheinwerfer und einen Kraftfahrzeug.

Aus dem allgemeinen Stand der Technik sind Scheinwerfer für Kraftfahrzeuge bekannt, mittels welchen sich zusätzliche Informationen für einen Fahrer in einen Umgebungsbereich des Kraftfahrzeugs projizieren lassen. Beispielsweise kann auf die Straße vor dem Kraftfahrzeug ein Geschwindigkeitslimit, ein Richtungspfeil eines Navigationssystems, der Füllstand des Tanks oder dergleichen projiziert werden. Insbesondere nachts ist solch eine zusätzliche Darstellung für einen Fahrer besonders gut erkennbar. Der Vorteil ist, dass der Fahrer seinen Blick nicht mehr von der Straße abwenden muss, um diese Informationen von einem Anzeigegerät im Fahrzeuginneren abzulesen.

Die US 8 260 536 B2 beschreibt beispielsweise solch einen Scheinwerfer mit einer als Laser ausgebildeten Leuchteinrichtung, mittels welchem zusätzliche Informationen auf die Straße vor einem Kraftfahrzeug projiziert werden können.

Die DE 10 2011 081 396 A1 beschreibt einen Scheinwerfer mit variabel einstellbarer Lichtverteilung. Diese wird beispielsweise dazu genutzt, Objekte wie Verkehrszeichen und deren Fahrtrichtungsempfehlungen, welche der von einem Navigationsgerät empfohlenen Fahrtrichtung entsprechen, durch eine besondere Beleuchtung hervorzuheben.

Die DE 100 34 381 C2 offenbart eine Informationsanzeigevorrichtung, mittels welcher Informationen außerhalb eines Kraftfahrzeugs im Sichtfeld eines Fahrers wiedergegeben werden können. Diese Informationsanzeigevorrichtung kann mit einem Navigationsgerät gekoppelt werden und dient dann dazu, entsprechende Richtungspfeile auf die Straße zu projizieren.

Auch die DE 101 34 594 A1 offenbart ein Beleuchtungssystem zur Beleuchtung eines Umgebungsbereichs eines Kraftfahrzeugs, mittels welchem Objekte hervorgehoben werden können oder zusätzliche Informationen in den Umgebungsbereich projiziert werden können. Zu diesem Zweck werden beispielsweise die von einem LCD erzeugten Lichtstrahlen von einem Polarisator polarisiert, um anschließend nur bestimmte Lichtstrahlen durch den Polarisationsfilter des LCDs hindurchzulassen. Dadurch können Objekte mit einem so genannten negativen Kontrast projiziert werden, das heißt, ein Teilbereich des Umgebungsbereichs ist hell beleuchtet, während ein zweiter Teilbereich, welcher das darzustellende Objekt umfasst, nicht oder im Vergleich schwächer beleuchtet wird.

Zudem beschreibt die WO 2013/088673 A1 einen Scheinwerfer für ein Kraftfahrzeug. Dabei kann mit einer ersten Lichtquelle Licht mit einer ersten Polarisation und mit einer zweiten Lichtquelle Licht mit einer zu der ersten Polarisation senkrechten, zweiten Polarisation ausgesendet werden.

Schließlich offenbart die US 2003/0147247 A1 einen Scheinwerfer, mittels welchem Licht mit einer vorbestimmten Polarisation ausgesendet werden kann. Zudem kann ein Polarisationsfilter vorgesehen sein, welcher durchlässiger für das Licht mit der vorbestimmten Polarisation ist.

Nachteilig bei allen genannten Beleuchtungseinrichtungen ist, dass die besondere Beleuchtung und/oder Darstellung von Objekten, Pfeilen, Geschwindigkeitslimits oder dergleichen in dem Umgebungsbereich des Kraftfahrzeugs andere Verkehrsteilnehmer ablenken kann. Beispielsweise kann der Fahrer eines entgegenkommenden Fahrzeugs ein auf die Straße projiziertes Geschwindigkeitslimit von 60 km/h irrtümlicherweise als ein für ihn geltendes Geschwindigkeitslimit von 90 km/h interpretieren. Auch Pfeile, welche auf den Boden projiziert sind, können andere Verkehrsteilnehmer gegebenenfalls ablenken und/oder irritieren. Dadurch kann es zu gefährlichen Verkehrssituationen kommen.

Aufgabe der vorliegenden Erfindung ist es daher, ein besonders verkehrssicheres Verfahren zum Beleuchten eines Umgebungsbereichs eines Kraftfahrzeugs zu schaffen. Außerdem ist es Aufgabe der vorliegenden Erfindung, einen besonders verkehrssicheren Scheinwerfer und ein besonders verkehrssicheres Kraftfahrzeug zu schaffen.

Diese Aufgabe wird erfindungsgemäß durch ein Verfahren mit den Merkmalen des Patentanspruchs 1 gelöst. Des Weiteren wird diese Aufgabe durch ein Kraftfahrzeug mit den Merkmalen des Patentanspruchs 7 gelöst. Vorteilhafte Ausgestaltungen mit zweckmäßigen Weiterbildungen der Erfindung sind in den übrigen Patentansprüchen angegeben.

Um ein besonders verkehrssicheres Verfahren zum Beleuchten eines Umgebungsbereichs eines Kraftfahrzeugs zu schaffen, sind die folgenden Schritte vorgesehen:
- Erzeugen von Lichtstrahlen mit einer Leuchteinrichtung eines Scheinwerfers des Kraftfahrzeugs zum Bereitstellen einer Lichtverteilung in dem Umgebungsbereich;
- Bestimmen eines ersten und zumindest eines zweiten Teilbereichs der Lichtverteilung;
- Ansteuern der Leuchteinrichtung mittels einer Steuereinrichtung derart, dass die Lichtstrahlen zum Bereitstellen der Lichtverteilung in dem ersten Teilbereich eine erste Polarisation aufweisen und die Lichtstrahlen zum Bereitstellen der Lichtverteilung in dem zumindest einen zweiten Teilbereich eine von der ersten verschiedene, zweite Polarisation aufweisen; und
- Absorbieren der in dem Umgebungsbereich in Richtung eines Insassen des Kraftfahrzeugs reflektierten Lichtstrahlen mit der zweiten Polarisation mittels eines Polarisationsfilters.

Der Insasse ist beispielsweise der Fahrer des Kraftfahrzeugs. Lichtstrahlen mit einer bestimmten Polarisation sind dahin gehend zu verstehen, dass der jeweilige Lichtstrahl wenigstens einen besonders hohen Polarisationsgrad bis hin zur einer vollständigen, einheitlichen Polarisation aufweist. Die zweite Polarisation ist beispielsweise um 90° zur ersten Polarisation verschoben. Durch die Reflexion der Lichtstrahlen mit der zweiten Polarisation in Richtung eines Insassen des Kraftfahrzeugs kann die Polarisation der im Umgebungsbereich reflektierten Lichtstrahlen gegenüber den vom Scheinwerfer erzeugten Lichtstrahlen - welche reflektiert werden - verschoben sein. Der Polarisationsfilter soll so ausgelegt sein, dass er eben diese reflektierten Lichtstrahlen, welche ihren Ursprung in den Lichtstrahlen mit der zweiten Polarisation haben, auch unter Berücksichtigung solch einer Verschiebung der Polarisation, wenigstens größtenteils oder vollständig absorbiert.

Der erste Teilbereich der Lichtverteilung kann beispielsweise der regulär durch den Scheinwerfer des Kraftfahrzeugs ausgeleuchtete Umgebungsbereich abzüglich des zweiten Teilbereichs sein. Der zweite Teilbereich umfasst beispielsweise die Grenzen einer Form, mittels welcher zusätzliche Informationen dargestellt werden sollen. Beispielsweise kann der zweite Teilbereich ein alphanumerisches Zeichen, beispielsweise "60 km/h", umfassen, um so für den Insassen des Kraftfahrzeugs ein Geschwindigkeitslimit auf eine Straße zu projizieren. Das in den Umgebungsbereich des Kraftfahrzeugs hin abgestrahlte Licht in Form von Lichtstrahlen wird zurück in das Auge des Insassen des Kraftfahrzeugs reflektiert. Dadurch, dass jedoch die Lichtstrahlen mit der zweiten Polarisation mittels des Polarisationsfilters absorbiert werden, nimmt der Insasse des Kraftfahrzeugs also den zweiten Teilbereich als nicht oder zumindest im Vergleich zum ersten Teilbereich schwächer beleuchtet wahr. Im beschriebenen Beispiel wäre also beispielsweise die "60 km/h" im Kontrast zum restlichen beleuchtenden Umgebungsbereich - also dem ersten Teilbereich - als weniger oder gar nicht beleuchtete Fläche auf der Straße für den Insassen erkennbar. Gleichzeitig ist der Umgebungsbereich des Kraftfahrzeugs, bestehend aus dem ersten und dem zweiten Teilbereich, durch einen externen Beobachter - wie beispielsweise den Fahrer eines weiteren Kraftfahrzeugs oder andere Verkehrsteilnehmer - als gleichmäßig beleuchtet wahrgenommen. Ein anderer Verkehrsteilnehmer kann also beispielsweise den zweiten Teilbereich in Form einer "60 km/h" nicht erkennen, sondern sieht einen homogen beleuchteten Umgebungsbereich. Andere Verkehrsteilnehmer können also nicht mehr durch die Projektion in den Umgebungsbereich des Kraftfahrzeugs abgelenkt werden. Damit ist die Verkehrssicherheit besonders erhöht.

In besonders vorteilhafter Ausgestaltung der Erfindung ist es vorgesehen, dass der erste und der zumindest eine zweite Teilbereich der Lichtverteilung derart bestimmt werden, dass sich in der optischen Wahrnehmung des Insassen infolge der absorbierten reflektierten Lichtstrahlen mit der zweiten Polarisation zumindest eine vorbestimmte geometrische Form ergibt. Bei der geometrischen Form kann es sich generell um Formen, Muster, Schraffuren und auch Textzeichen handeln. Damit kann eine Vielzahl von verschiedenen Informationen flexibel im Umgebungsbereich des Kraftfahrzeugs dargestellt werden. Insbesondere mit der Darstellung einer Schraffur lässt sich außerdem der Effekt erzielen, dass ein bestimmter Bereich, welcher wenigstens aus Teilen des ersten Teilbereichs und Teilen des zweiten Teilbereichs besteht, eine gemeinsame geometrische Form bildet. Diese gemeinsame Form kann dann beispielsweise in der optischen Wahrnehmung des Insassen noch als beleuchtet wahrgenommen werden, allerdings mit einer gegenüber einem anderen Teilbereich reduzierten Helligkeit. Alternativ kann durch eine Schraffur eine weitere Information wie beispielsweise eine Zuordnung an den Insassen übermittelt werden. Außerdem ist dieser Bereich damit weiterhin beleuchtet, sodass der Insasse des Kraftfahrzeugs weiterhin mögliche Gefahren und/oder Hindernisse erkennen kann. Auch hiermit ist die Sicherheit besonders gesteigert.

In weiterer vorteilhafter Ausgestaltung der Erfindung ist es vorgesehen, dass der erste und der zumindest eine zweite Teilbereich der Lichtverteilung in Abhängigkeit von Navigationsdaten eines Navigationssystems des Kraftfahrzeugs bestimmt werden. Insbesondere Navigationsdaten, welche dem Insassen des Kraftfahrzeugs beispielsweise in Form von Pfeilen auf der Straße dargestellt werden, sind für einen Fahrer eines Kraftfahrzeugs eine besonders große Hilfe. Das Ablesen von Navigationsinformationen eines Navigationssystems von einer Anzeigeeinrichtung, beispielsweise im Innenraum des Kraftfahrzeugs, während der Fahrt, bedeutet eine besonders hohe Ablenkung, welche so vermieden werden kann. Gleichzeitig können solche Darstellungen im Umgebungsbereich des Kraftfahrzeugs andere Verkehrsteilnehmer besonders stark ablenken, da gegebenenfalls eine Verwechslung mit Fahrbahnmarkierungen in Form von Pfeilen und/oder mit der Darstellung von eigenen Navigationsdaten durch einen ebenfalls dazu ausgebildeten Scheinwerfer möglich ist. Dadurch, dass diese Navigationsdaten für andere Verkehrsteilnehmer nicht sichtbar auf dem Umgebungsbereich des Kraftfahrzeugs dargestellt werden, ist somit die Verkehrssicherheit besonders erhöht.

Entsprechend ist es besonders vorteilhaft, wenn die zumindest eine vorbestimmte geometrische Form, die sich in der optischen Wahrnehmung des Insassen ergibt, ein Pfeil ist, der anhand der Navigationsdaten bestimmt wird. Die Navigationsdaten können beispielsweise eine Route beschreiben, entlang welcher der Fahrer navigiert wird. Insbesondere ist es so möglich, diesen Pfeil dem tatsächlichen Straßenverlauf im Umgebungsbereich des Kraftfahrzeugs zuzuordnen, sodass für den Fahrer des Kraftfahrzeugs die Route besonders gut erkennbar ist. Mit einem solchen Pfeil kann der Fahrer besonders zuverlässig bei der Navigation unterstützt werden.

Besonders vorteilhaft ist es außerdem, wenn durch einen Sensor Umgebungsinformationen erfasst werden und der erste und der zumindest eine zweite Teilbereich der Lichtverteilung in Abhängigkeit dieser Umgebungsinformationen bestimmt werden. Bei dem Sensor kann es sich beispielsweise um eine Kamera handeln. Die Umgebungsinformationen können beispielsweise die Lage von Verkehrsschildern und Fahrbahnmarkierungen beschreiben. Damit ist es dann beispielsweise möglich, Objekte wie Verkehrsschilder und Fahrbahnmarkierungen gezielt durch ein Beleuchten mit einer Schraffur hervorzuheben oder durch ein Ausblenden von einer Wahrnehmung des Insassen des Kraftfahrzeugs auszuschließen. Bei dem Sensor kann es sich auch um einen Radarsensor, einen Ultraschallsensor, einen Lidar-Sensor oder dergleichen handeln. Damit kann die Aufmerksamkeit und Wahrnehmung des Insassen des Kraftfahrzeugs gezielt auf wichtige Informationen und Bereiche der Umgebung des Kraftfahrzeugs gelenkt werden.

In weiterer vorteilhafter Ausgestaltung der Erfindung ist es vorgesehen, dass die Lichtverteilung zeilenweise durch ein Ablenken der Lichtstrahlen mittels einer Ablenkeinrichtung des Scheinwerfers bereitgestellt wird. Durch einen zeilenweisen Aufbau der Lichtverteilung können Informationen im Umgebungsbereich des Kraftfahrzeugs besonders einfach und mit einer besonders hohen Auflösung dargestellt werden. Außerdem ist ein zeilenweiser Aufbau der Lichtverteilung besonders einfach mit verschiedenen Polarisationen kombinierbar. In den Bereichen einer Zeile, welche dem zweiten Teilbereich der Lichtverteilung zugeordnet sind, wird dafür bei der Leuchteinrichtung bei der Erzeugung Lichtstrahlen von der ersten zu der zweiten Polarisation gewechselt.

Um ein besonders verkehrssicheres Kraftfahrzeug mit einem Scheinwerfer zum Beleuchten eines Umgebungsbereichs mit einer Leuchteinrichtung zum Erzeugen von Lichtstrahlen zum Bereitstellen einer Lichtverteilung in dem Umgebungsbereich zu schaffen, ist es vorgesehen, dass die Leuchteinrichtung durch eine Steuereinrichtung so ansteuerbar ist, dass die Lichtstrahlen in einem ersten vorbestimmten Teilbereich der Lichtverteilung eine erste Polarisation aufweisen und in dem zumindest einen zweiten vorbestimmten Teilbereich der Lichtverteilung eine zweite, von der ersten verschiedene Polarisation aufweisen.

Zudem ist es vorgesehen, dass eine Frontscheibe des Kraftfahrzeugs einen als Polarisationsfolie ausgebildeten Polarisationsfilter zum Absorbieren der in dem Umgebungsbereich reflektierten Lichtstrahlen mit der zweiten Polarisation aufweist. Die Polarisationsfolie kann auch auf den Seitenscheiben und/oder der Heckscheibe angeordnet sein. Die Polarisationsfolie kann die Frontscheibe, die Seitenscheiben und/oder die Heckscheibe zumindest bereichsweise bedecken. Dadurch kann in besonders einfacher und kostengünstiger Weise sichergestellt werden, dass ein besonders großer Anteil der reflektierten Lichtstrahlen mit der zweiten Polarisation von dem Polarisationsfilter bzw. der Polarisationsfolie absorbiert wird. Auch für den Insassen des Kraftfahrzeugs ist solch eine Vorrichtung komfortabler als beispielsweise die Verwendung einer polarisierenden Brille als Polarisationsfilter.

In weiterer vorteilhafter Ausgestaltung des Kraftfahrzeugs ist es vorgesehen, dass die Leuchteinrichtung einen Laser umfasst und die Lichtverteilung zeilenweise durch Ablenkung der von dem Laser erzeugten Lichtstrahlen mittels einer Ablenkeinrichtung bereitstellbar ist. Gerade ein Laser ist besonders gut für das zeilenweise Erzeugen einer Lichtverteilung geeignet. Ein Laser kann besonders einfach einen besonders fokussierten und/oder schmalen Lichtstrahl erzeugen. Dadurch ist die Lichtverteilung mit einer besonders hohen Auflösung variabel einstellbar. Außerdem erzeugt ein Laser bereits polarisierte Lichtstrahlen, das heißt Lichtstrahlen mit einem hohen Polarisationsgrad bis hin zu einer vollständigen Polarisation. Ein Wechsel von einem Lichtstrahl mit der ersten Polarisation zu einem Lichtstrahl mit der zweiten Polarisation kann dann in einfacher Weise durch eine elektronische Ansteuerung des Lasers oder durch einen besonders einfach gestalteten Polarisator erfolgen. Alternativ können auch zwei Laser verwendet werden, welche jeweils Lichtstrahlen mit der ersten bzw. der zweiten Polarisation erzeugen. In diesem Fall muss dann beim zeilenweisen Bereitstellen der Lichtverteilung zwischen den beiden Lasern zum Erzeugen der jeweiligen Lichtstrahlen mit erster oder zweiter Polarisation gewechselt werden.

Alternativ kann es vorgesehen werden, dass der Polarisationsfilter zwischen einer Verstaustellung, in welcher der Polarisationsfilter wenigstens teilweise von einem Verkleidungselement des Innenraums des Kraftfahrzeugs aufgenommen ist, und einer Betriebsstellung, in welcher der Polarisationsfilter wenigstens teilweise von dem Verkleidungselement freigegeben ist und aus Sicht eines Insassen des Kraftfahrzeugs vor der Frontscheibe positioniert ist, verstellbar ist. Mit anderen Worten kann also der Polarisationsfilter ein- und ausgefahren werden. Damit kann insbesondere verhindert werden, dass der Polarisationsfilter unerwünschte Effekte erzeugt, wenn er nicht benötigt wird. Außerdem ist es so nicht nötig, die Frontscheibe des Kraftfahrzeugs zu verändern.

In beiden Ausführungsformen kann der Polarisationsfilter nur einen Teilbereich des Sichtfelds des Insassen des Kraftfahrzeugs einnehmen. Damit ist dann auch für den Insassen des Kraftfahrzeugs nur in diesem Bereich die Darstellung von Informationen auf der Straße ersichtlich. Schaut der Insasse dann beispielsweise durch einen anderen Bereich der Frontscheibe auf den zweiten Teilbereich, ohne dass sich der Polarisationsfilter im Strahlengang der reflektierten Lichtstrahlen befindet, erscheint dem Insassen auch der zweite Teilbereich der Lichtverteilung gleichmäßig beleuchtet. Somit kann der Insasse gegebenenfalls dort vorhandene Gefahren oder Hindernisse besonders gut wahrnehmen und/oder durch Lenken seiner Sicht wählen, ob er den zweiten Teilbereich der Lichtverteilung wahrnehmen möchte oder nicht.

Die vorstehend im Zusammenhang mit dem erfindungsgemäßen Verfahren und Kraftfahrzeug beschriebenen Vorteile und Ausgestaltungen gelten in ebensolcher Weise jeweils auch für das Verfahren oder das Kraftfahrzeug.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1: eine schematischen Draufsicht ein Kraftfahrzeug mit Scheinwerfern, mittels welchen ein Umgebungsbereich des Kraftfahrzeugs beleuchtet wird;
- Fig. 2: eine schematische Seitenansicht des Kraftfahrzeugs gemäß Fig. 1; und
- Fig. 3: einen schematischen Ablauf des erfindungsgemäßen Verfahrens.

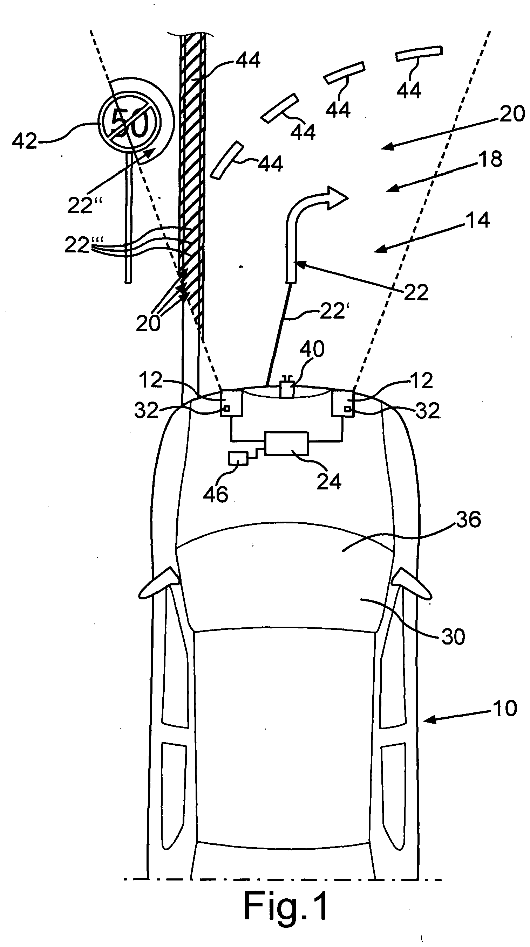

Anhand der Darstellungen der Fig. 1 bis 3 soll nun im Folgenden das erfindungsgemäße Verfahren zum Beleuchten eines Umgebungsbereichs eines Kraftwagens 10 prinzipiell erläutert werden.

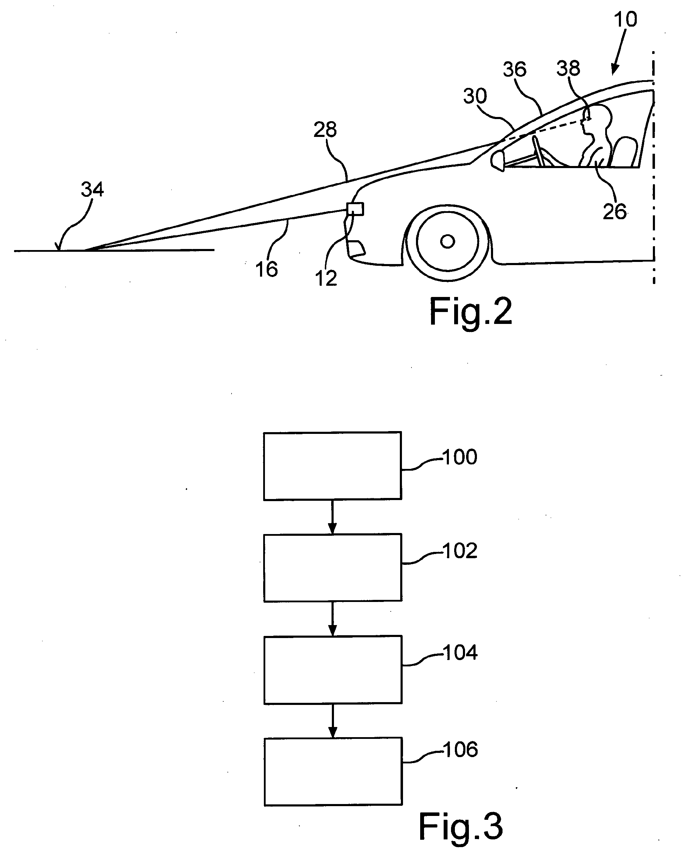

Das Verfahren zum Beleuchten eines Umgebungsbereichs 14 des Kraftfahrzeugs 10 gliedert sich in die folgenden Schritte:
- Die Lichtstrahlen 16 werden mit einer Leuchteinrichtung eines Scheinwerfers 12 des Kraftfahrzeugs 10 zum Bereitstellen einer Lichtverteilung 18 in dem Umgebungsbereich 14 erzeugt. In Fig. 3 ist dies durch den Block 100 veranschaulicht.
- Ein erster (20) und ein zweiter Teilbereich 22 der Lichtverteilung 18 wird bestimmt. In Fig. 3 ist dies durch Block 102 dargestellt.
- Mittels einer Steuereinrichtung 24 wird die Leuchteinrichtung derart angesteuert, dass die Lichtstrahlen 16 zum Bereitstellen der Lichtverteilung 18 in dem ersten Teilbereich 20 eine erste Polarisation aufweisen und die Lichtstrahlen 16 zum Bereitstellen der Lichtverteilung 18 in dem zumindest einen zweiten Teilbereich 22 eine von der ersten verschiedene, zweite Polarisation aufweisen. Dies wird durch den Block 104 in Fig. 3 veranschaulicht.
- Die in Richtung eines Insassen 26 des Kraftfahrzeugs 10 reflektierten Lichtstrahlen 28, welche durch Lichtstrahlen 16 mit der zweiten Polarisation entstanden sind, werden mittels eines Polarisationsfilters 30 absorbiert. Dies wird durch den Block 106 in Fig. 3 dargestellt.

Der Effekt dieses Verfahrens ist zunächst, dass die gesamte Lichtverteilung 18 für einen externen Beobachter weitestgehend homogen beleuchtet ist. Gleichzeitig sind jedoch für den Insassen 26 des Kraftfahrzeugs 10 die zweiten Teilbereiche 22 - in Fig. 1 markiert durch 22 bis 22"' - nicht oder weniger stark beleuchtet. Damit sind die in Fig. 1 dargestellten geometrischen Figuren für den Insassen 26 auf einer Straße erkennbar. Dem Insassen 26 des Kraftfahrzeugs 10, welcher, wie in Fig. 2 gezeigt, beispielsweise der Fahrer des Kraftfahrzeugs 10 ist, können also zusätzliche Informationen in einem Umgebungsbereich 14 des Kraftfahrzeugs 10 dargestellt werden, ohne das dabei weitere Verkehrsteilnehmer abgelenkt werden. Damit ist die Verkehrssicherheit besonders erhöht.

Anhand des konkreten Beispiels in Fig. 1 soll nun die genaue Funktionsweise des erfindungsgemäßen Verfahrens, Scheinwerfers 12 und Kraftfahrzeugs 10 mit beispielhaft möglichen Weiterbildungen weiter erläutert werden. Die Scheinwerfer 12 umfassen beispielsweise als Leuchteinrichtung zwei Laser, die jeweils Lichtstrahlen 16 mit einer jeweils zugeordneten, voneinander verschiedenen Polarisation - der ersten und der zweiten Polarisation - erzeugen. Durch Ablenken der Lichtstrahlen 16 mittels einer Ablenkeinrichtung 32 des Scheinwerfers wird zeilenweise eine Lichtverteilung 18 bereitgestellt. Durch Wechsel zwischen dem ersten und dem zweiten Laser werden dabei Teilbereiche 20, 22 der Lichtverteilung 18 mit Lichtstrahlen 16 mit einer ersten Polarisation und mit einer zweiten Polarisation erzeugt. Ein erster Teilbereich 20 der Lichtverteilung 18 wird also mit Lichtstrahlen 16 mit der ersten Polarisation erzeugt. Ein zweiter Teilbereich 22 (genauso wie 22', 22" und 22"') der Lichtverteilung 18 wird also mit Lichtstrahlen 16 mit der zweiten Polarisation erzeugt.

Der zweite Teilbereich 22 wird beispielsweise in Abhängigkeit von Navigationsdaten eines Navigationssystems 46 des Kraftfahrzeugs 10 bestimmt. Im vorliegenden Fall hat das Navigationssystem 46 beispielsweise berechnet, dass der Insasse 26 mit dem Kraftfahrzeug 10 rechts abbiegen soll, um zu seinem Ziel zu gelangen. Deswegen entspricht der zweite Teilbereich 22 der Form eines Rechtspfeils.

Das in diesem zweiten Teilbereich 22 von einer Oberfläche 34 der Straße zum Insassen 26 des Kraftfahrzeugs 10 zurückreflektierte Licht in Form der reflektierten Lichtstrahlen 28 trifft - wie in Fig. 2 dargestellt - auf die Frontscheibe 36 des Kraftfahrzeugs 10. Diese Frontscheibe 36 ist mit einem als Polarisationsfolie ausgebildeten Polarisationsfilter 30 überzogen. Polarisationsfilter 30 haben beispielsweise eine unterschiedliche Durchlässigkeit für Lichtstrahlen 28, je nach Ausrichtung des Polarisationsfilters 30 und der Polarisationsrichtung der Lichtstrahlen 28. Dadurch absorbiert dieser Polarisationsfilter 30 die Lichtstrahlen 28 wenigstens teilweise, welche durch eine Reflexion der Lichtstrahlen 16 mit der zweiten Polarisation erzeugt worden sind. Entsprechend ist für den Insassen 26 der zweite Teilbereich 22 als nicht oder gegenüber dem ersten Teilbereich 20 schwächer beleuchtete und damit dunkle Fläche wahrnehmbar.

Lediglich die durch den ersten Teilbereich 20 der Lichtverteilung 18 reflektierten Lichtstrahlen 28 durchdringen den Polarisationsfilter 30 und die Frontscheibe 36 im Wesentlichen ungehindert und gelangen nahezu ohne Absorption zu einem Auge 38 des Insassen 26 des Kraftfahrzeugs 10. Deswegen wird nur dieser erste Teilbereich 20 durch den Insassen 26 des Kraftfahrzeugs 10 als beleuchtet oder im Vergleich wenigstens stärker beleuchtet wahrgenommen. Für andere Verkehrsteilnehmer, die keinen Polarisationsfilter zum Absorbieren von polarisierten Lichtstrahlen aufweisen, ist dagegen der zweite Teilbereich 22 nicht wahrnehmbar.

Für entgegenkommende andere Verkehrsteilnehmer, welche doch solch einen Polarisationsfilter 30 aufweisen, ist der zweite Teilbereich 22 ebenfalls nicht oder wenigstens so schlecht erkennbar, dass er nicht zu einer Ablenkung führt, da durch unterschiedliche Reflexionswinkel der Lichtstrahlen 16 die Polarisation der reflektierten Lichtstrahlen 28 unterschiedlich verändert werden kann. Für einen parallel zum Kraftfahrzeug 10 ausgerichteten, weiteren Verkehrsteilnehmer ist dagegen der zweite Teilbereich 22 der Lichtverteilung 18 durchaus erkennbar, wenn er über den entsprechenden Polarisationsfilter 30 verfügt. Aus diesem Grund kann es beispielsweise sinnvoll sein, Symbole, wie den Navigationspfeil, welche durch den zweiten Teilbereich 22 abgebildet ist, mit dem dazugehörigen Kraftfahrzeug 10 optisch zu verbinden um eine Zuordnung zu ermöglichen. Dies kann beispielsweise durch einen weiteren zweiten Teilbereich 22' erfolgen, welcher im gezeigten Ausführungsbeispiel eine nicht beleuchtete oder wenigstens abgedunkelte Linie zwischen dem zweiten Teilbereich 22 (dem Pfeil) und dem Kraftfahrzeug 10 darstellt.

Weiterhin ist in Fig. 1 zu erkennen, dass ein Sensor 40 zum Erfassen von Umgebungsinformationen vorgesehen ist. Im gezeigten Ausführungsbeispiel ist der Sensor 40 als Kamera ausgebildet. In Abhängigkeit dieser Umgebungsinformationen kann alternativ oder zusätzlich der erste 20 und die zweiten Teilbereich 22, 22', 22" und 22'" der Lichtverteilung 18 bestimmt werden. Beispielsweise wird durch den Sensor 40 ein Verkehrsschild 42 erfasst. In diesem Fall stellt das Verkehrsschild 42 eine Aufhebung des Geschwindigkeitslimits dar. Durch eine Kombination der Umgebungsinformationen mit den Navigationsdaten kann beispielsweise bestimmt werden, dass das Kraftfahrzeug 10 rechts abbiegen soll und dort die Aufhebung des Geschwindigkeitslimits nicht gültig ist. Deswegen wird ein weiterer zweiter Teilbereich 22" bestimmt, welcher wenigstens teilweise der Position des Verkehrsschilds 42 entspricht. Damit wird in der Wahrnehmung des Insassen 26 des Kraftfahrzeugs 10 dieses Verkehrsschild 42 nicht beleuchtet. Damit wird der Insasse 26 durch das Verkehrsschild 42 und dessen unnötige Information nicht oder besonders wenig abgelenkt, sodass die Verkehrssicherheit besonders erhöht ist.

Mit dem Sensor 40 können beispielsweise mittels einer Linienerkennung Fahrbahnmarkierungen 44 erfasst werden und deren Position relativ zum Kraftfahrzeug 10 ermittelt werden. Im gezeigten Beispiel ist für den Insassen 26 des Kraftfahrzeugs 10 die Fahrbahnmarkierung 44 für eine Rechtsabbiegerspur von besonderer Relevanz, da ihn seiner Route dort entlang führen wird. Deswegen wird diesen Fahrbahnmarkierungen 44 der erste Teilbereich 20 der Lichtverteilung 18 zugeordnet, das heißt sie werden vollständig beleuchtet. Die Fahrbahnmarkierung 44 in Form einer durchgezogenen Linie einer weiterführenden Geradeausspur wird dagegen als von besonders untergeordneter Relevanz für den Insassen 26 des Kraftfahrzeugs 10 gewertet. Aus diesem Grund wird über diese Fahrbahnmarkierung 44 eine Schraffur aus dem ersten Teilbereich 20 und weiteren zweiten Teilbereichen 22'" der Lichtverteilung 18 gelegt. Durch diese Schraffur kann dem Insassen 26 signalisiert werden, dass diese Fahrbahnmarkierung 44 für ihn nicht relevant ist. Gleichzeitig wird diese Fahrbahnmarkierung 44 aber weiterhin so weit beleuchtet, dass sie dem Insassen 26 als Orientierungshilfe dienen kann.

Natürlich sind auch viele weitere Formen, Muster, Schraffuren, Symbole und Textzeichen durch eine Kombination des ersten Teilbereichs 20 und des zweiten Teilbereichs 22 der Lichtverteilung 18 darstellbar, um damit wichtige Informationen wie beispielsweise Tempolimits, Tankfüllstand oder dergleichen an den Insassen 26 des Kraftfahrzeugs 10 zu übermitteln.

Um den Rechenaufwand zum Bestimmen des ersten Teilbereichs 20 der Lichtverteilung 18 zu reduzieren, kann ausschließlich der zweite Teilbereich 22 (sowie 22', 22" und 22'") der Lichtverteilung 18 bestimmt werden. Der erste Teilbereich 20 der Lichtverteilung 18 ergibt sich dann aus der regulären Lichtverteilung 18 des Scheinwerfers 12 abzüglich aller zweiten Teilbereiche 22.

## Patentansprüche

1. Verfahren zum Beleuchten eines Umgebungsbereichs (14) eines Kraftfahrzeugs (10) mit den Schritten:
- Erzeugen von Lichtstrahlen (16) mit einer Leuchteinrichtung eines Scheinwerfers (12) des Kraftfahrzeugs (10) zum Bereitstellen einer Lichtverteilung (18) in dem Umgebungsbereich (14);
- Ansteuern der Leuchteinrichtung mittels einer Steuereinrichtung (24) derart, dass die Lichtstrahlen (16) zum Bereitstellen der Lichtverteilung (18) eine erste Polarisation aufweisen; und
- Absorbieren der in dem Umgebungsbereich (14) in Richtung eines Insassen (26) des Kraftfahrzeugs (10) reflektierten Lichtstrahlen (28) mittels eines Polarisationsfilters (30),
**gekennzeichnet durch**
- Bestimmen eines ersten (20) und zumindest eines zweiten Teilbereichs (22, 22', 22", 22'") der Lichtverteilung (18);
- Ansteuern der Leuchteinrichtung derart, dass die Lichtstrahlen (16) in dem ersten Teilbereich (20) die erste Polarisation aufweisen und die Lichtstrahlen (16) zum Bereitstellen der Lichtverteilung (18) in dem zumindest einen zweiten Teilbereich (22, 22', 22", 22"') eine von der ersten verschiedene, zweite Polarisation aufweisen; und
- Absorbieren der reflektierten Lichtstrahlen (28) mit der zweiten Polarisation.

2. Verfahren nach Anspruch 1,
**dadurch gekennzeichnet, dass**
der erste (20) und der zumindest eine zweite Teilbereich (22, 22', 22", 22"') der Lichtverteilung (18) derart bestimmt werden, dass sich in der optischen Wahrnehmung des Insassen (26) infolge der absorbierten reflektierten Lichtstrahlen (28) mit der zweiten Polarisation zumindest eine vorbestimmte geometrische Form ergibt.

3. Verfahren nach einem Anspruch 1 oder 2,
**dadurch gekennzeichnet, dass**
der erste (20) und der zumindest eine zweite Teilbereich (22, 22', 22", 22'") der Lichtverteilung (18) in Abhängigkeit von Navigationsdaten eines Navigationssystems (46) des Kraftfahrzeugs (10) bestimmt werden.

4. Verfahren nach Anspruch 3,
**dadurch gekennzeichnet, dass**
die zumindest eine vorbestimmte geometrische Form, die sich ein der optischen Wahrnehmung des Insassen (26) ergibt, ein Pfeil ist, der anhand der Navigationsdaten bestimmt wird.

5. Verfahren nach einem der vorherigen Ansprüche,
**dadurch gekennzeichnet, dass**
durch einen Sensor (40) Umgebungsinformationen erfasst werden und der erste (20) und der zumindest eine zweite Teilbereich (22, 22', 22", 22"') der Lichtverteilung (18) in Abhängigkeit dieser Umgebungsinformationen bestimmt werden.

6. Verfahren nach einem der vorherigen Ansprüche,
**dadurch gekennzeichnet, dass**
die Lichtverteilung (18) zeilenweise durch ein Ablenken der Lichtstrahlen (16) mittels einer Ablenkeinrichtung (32) des Scheinwerfers (12) bereitgestellt werden.

7. Kraftfahrzeug (10) mit
- einem Scheinwerfer (12) zum Beleuchten eines Umgebungsbereichs (14), mit einer Leuchteinrichtung zum Erzeugen von Lichtstrahlen (16) zum Bereitstellen einer Lichtverteilung (18) in dem Umgebungsbereich (14), wobei die Leuchteinrichtung durch eine Steuereinrichtung (24) so ansteuerbar ist, dass die Lichtstrahlen (16) in einem ersten, vorbestimmten Teilbereich (20) der Lichtverteilung (18) eine erste Polarisation aufweisen und in zumindest einem zweiten vorbestimmten Teilbereich (22, 22', 22", 22"') der Lichtverteilung (18) eine zweite, von der ersten verschiedene Polarisation aufweisen, und
- einer Frontscheibe (36),
**dadurch gekennzeichnet, dass**
- die Frontscheibe (36) einen als Polarisationsfolie ausgebildeten Polarisationsfilter (30) zum Absorbieren der in dem Umgebungsbereich (14) reflektieren Lichtstrahlen (28) mit der zweiten Polarisation aufweist.

8. Kraftfahrzeug (10) nach Anspruch 7,
**dadurch gekennzeichnet, dass**
die Leuchteinrichtung einen Laser umfasst und die Lichtverteilung (18) zeilenweise durch Ablenken der von dem Laser erzeugten Lichtstrahlen (16) mittels einer Ablenkeinrichtung (32) bereitstellbar ist.

9. Kraftfahrzeug (10) nach einem Anspruch 7 oder 8,
**dadurch gekennzeichnet, dass**
der Polarisationsfilter (30) zwischen einer Verstaustellung, in welcher der Polarisationsfilter (30) wenigstens teilweise von einem Verkleidungselement des Innenraums des Kraftfahrzeugs (10) aufgenommen ist, und einer Betriebsstellung, in welcher der Polarisationsfilter (30) wenigstens teilweise von dem Verkleidungselement freigegeben ist und aus Sicht eines Insassen (26) des Kraftfahrzeugs (10) vor der Frontscheibe (36) positioniert ist, verstellbar ist.

## Claims

1. Method for illuminating a surrounding area (14) of a motor vehicle (10), having the steps of:
- generating light beams (16) with a lighting device of a headlamp (12) of the motor vehicle (10) for providing a light distribution (18) in the surrounding area (14);
- controlling the lighting device by means of a controlling device (24) such that the light beams (16) for providing the light distribution (18) have a first polarisation; and
- absorbing by means of a polarisation filter (30) the light beams (28) reflected in the surrounding area (14) in the direction of an occupant (26) of the motor vehicle (10),
**characterised by**
- determining a first (20) and at least one second part region (22, 22', 22", 22"') of the light distribution (18);
- controlling the lighting device such that the light beams (16) in the first part region (20) have the first polarisation and the light beams (16) for providing the light distribution (18) in the at least one second part region (22, 22', 22", 22'") have a second polarisation different from the first; and
- absorbing the reflected light beams (28) with the second polarisation.

2. Method according to claim 1,
**characterised in that**
the first (20) and the at least one second part region (22, 22', 22", 22'") of the light distribution (18) are specified such that there results at least one predetermined geometrical shape in the optical perception of the occupant (26) as a result of the absorbed reflected light beams (28) with the second polarisation.

3. Method according to claim 1 or 2,
**characterised in that**
the first (20) and the at least one second part region (22, 22', 22", 22'") of the light distribution (18) are specified as a function of navigational data of a navigation system (46) of the motor vehicle (10).

4. Method according to claim 3,
**characterised in that**
the at least one predetermined geometrical shape which results in the optical perception of the occupant (26) is an arrow which is determined on the basis of the navigational data.

5. Method according to any of the preceding claims,
**characterised in that**
surrounding information is detected by a sensor (40) and the first (20) and the at least one second part region (22, 22', 22", 22"') of the light distribution (18) are determined as a function of this surrounding information.

6. Method according to any of the preceding claims,
**characterised in that**
the light distribution (18) is provided line by line by a deviation of the light beams (16) by means of a deviation device (32) of the headlamp (12).

7. Motor vehicle having
- a headlamp (12) for illuminating a surrounding area (14), having a lighting device for generating light beams (16) for providing a light distribution (18) in the surrounding area (14), wherein the lighting device can be controlled by a controlling device (24) such that the light beams (16) in a first predetermined part region (20) of the light distribution (18) have a first polarisation and have a second polarisation different from the first in at least one second predetermined part region (22, 22', 22", 22'") of the light distribution (18), and
- a front windscreen (36),
**characterised in that**
- the front windscreen (36) has a polarisation filter (30) in the form of a polarisation film for absorbing the light beams (28) with the second polarisation reflected in the surrounding area (14).

8. Motor vehicle (10) according to claim 7,
**characterised in that**
the lighting device includes a laser and the light distribution (18) can be provided line by line by diverting by means of a deviation device (32) the light beams (16) generated by the laser.

9. Motor vehicle (10) according to claim 7 or 8,
**characterised in that**
the polarisation filter (30) can be adjusted between a stowage position, in which the polarisation filter (30) is at least partially accommodated by a cladding element of the interior of the motor vehicle (10) and an operating position, in which the polarisation filter (30) is at least partially released by the cladding element and is positioned in front of the front windscreen (36) from the point of view of an occupant (26) of the motor vehicle (10).

## Revendications

1. Procédé d'éclairage d'une zone environnante (14) d'un véhicule automobile (10) avec les étapes de :
- génération de faisceaux lumineux (16) avec un dispositif d'éclairage d'un phare (12) du véhicule automobile (10) pour assurer une répartition de la lumière (18) dans la zone environnante (14) ;
- commande du dispositif d'éclairage au moyen d'un dispositif de commande (24) de sorte que les faisceaux lumineux (16) destinés à assurer la répartition de la lumière (18) présentent une première polarisation ; et
- absorption des faisceaux lumineux réfléchis (28) dans la zone environnante (14) en direction d'un occupant (26) du véhicule automobile (10) au moyen d'un filtre de polarisation (30),
**caractérisé par** :
- la détermination d'une première (20) et d'au moins une deuxième zone partielle (22, 22', 22", 22"') de la répartition de la lumière (18) ;
- la commande du dispositif d'éclairage de sorte que les faisceaux lumineux (16) dans la première zone partielle (20) présentent la première polarisation et que les faisceaux lumineux (16) pour assurer la répartition de la lumière (18) dans l'au moins une deuxième zone partielle (22, 22', 22", 22"') présentent une deuxième polarisation différente de la première ; et
- absorption des faisceaux lumineux réfléchis (28) avec la deuxième polarisation.

2. Procédé selon la revendication 1,
**caractérisé en ce que**
la première (20) et l'au moins une deuxième zone partielle (22, 22', 22", 22"') de la répartition de la lumière (18) sont déterminées de sorte qu'au moins une forme géométrique prédéterminée soit produite dans la perception optique de l'occupant (26) par suite des faisceaux lumineux réfléchis (28) et absorbés avec la deuxième polarisation.

3. Procédé selon la revendication 1 ou 2,
**caractérisé en ce que**
la première (20) et l'au moins une deuxième zone partielle (22, 22', 22", 22"') de la répartition de la lumière (18) sont déterminées en fonction de données de navigation d'un système de navigation (46) du véhicule automobile (10).

4. Procédé selon la revendication 3,
**caractérisé en ce que**
l'au moins une forme géométrique prédéterminée produite dans la perception visuelle de l'occupant (26) est une flèche déterminée sur la base des données de navigation.

5. Procédé selon l'une quelconque des revendications précédentes,
**caractérisé en ce que**
des informations environnementales sont détectées par un capteur (40) et la première (20) et l'au moins une deuxième zone partielle (22, 22', 22", 22"') de la répartition de la lumière (18) sont déterminées en fonction de ces informations environnementales.

6. Procédé selon l'une quelconque des revendications précédentes,
**caractérisé en ce que**
la répartition de la lumière (18) est assurée ligne par ligne en déviant les faisceaux lumineux (16) au moyen d'un dispositif de déviation (32) du phare (12).

7. Véhicule automobile (10) avec
- un phare (12) pour l'éclairage d'une zone environnante (14), avec un dispositif d'éclairage pour la génération de faisceaux lumineux (16) pour assurer une répartition de la lumière (18) dans la zone environnante (14), le dispositif d'éclairage pouvant être commandé par un dispositif de commande (24) de sorte que les faisceaux lumineux (16) présentent une première polarisation dans une première zone partielle prédéterminée (20) de la répartition de la lumière (18) et une deuxième polarisation différente de la première dans au moins une deuxième zone partielle prédéterminée (22, 22', 22", 22"') de la répartition de la lumière (18), et
- un pare-brise (36),
**caractérisé en ce que**
- le pare-brise (36) présente un filtre de polarisation (30) formé en tant que film polarisant pour absorber les rayons lumineux réfléchis (28) dans la zone environnante (14) avec la deuxième polarisation.

8. Véhicule automobile (10) selon la revendication 7,
**caractérisé en ce que**
le dispositif d'éclairage comprend un laser et la répartition de la lumière (18) peut être assurée ligne par ligne en déviant les faisceaux lumineux (16) générés par le laser au moyen d'un dispositif de déviation (32).

9. Véhicule automobile (10) selon la revendication 7 ou 8,
**caractérisé en ce que**
le filtre de polarisation (30) peut être réglé entre une position de rangement, dans laquelle le filtre de polarisation (30) est au moins partiellement reçu par un élément d'habillage de l'habitacle du véhicule automobile (10), et une position de fonctionnement, dans laquelle le filtre de polarisation (30) est au moins partiellement relâché de l'élément d'habillage et est positionné devant le pare-brise (36) du point de vue d'un occupant (26) du véhicule automobile (10).
